# EUROPEAN PATENT SPECIFICATION

(11) **EP 3 331 056 B1**
(45) Date of publication and mention of the grant of the patent: **26.02.2020**
(21) Application number: 17203834.1
(22) Date of filing: 27.11.2017
(51) Int. Cl.: H01M 2/10, A01D 34/78, A01D 34/81, A01D 101/00

(54) **ELECTRIC POWER EQUIPMENT**
ELEKTRISCHE ANLAGE
ÉQUIPEMENT D'ALIMENTATION ÉLECTRIQUE

(30) Priority: 30.11.2016 JP 2016233537
(43) Date of publication of application: 06.06.2018
(73) Proprietor: HONDA MOTOR CO., LTD., Tokyo 107-8556 (JP)
(72) Inventor: YAMAZAKI, Tatsuya, Wako-shi, Saitama 351-0193 (JP); SHIMIZU, Norikazu, Wako-shi, Saitama 351-0193 (JP)
(74) Representative: Weickmann & Weickmann PartmbB

(56) References cited:
- EP-A1- 2 534 937
- US-A- 6 056 077
- US-A1- 2004 031 632
- US-A1- 2004 157 117

## Description

### TECHNICAL FIELD

The present invention relates to electric power equipment such as a lawn mower, and in particular to electric equipment provided with a rechargeable and removable battery.

### BACKGROUND ART

Electric mowers as well as other forms of electric power equipment are often provided with a rechargeable and removable battery. JP2010-124697A discloses an electric mower including a blade housing accommodating an electric mower and a cutting blade. The blade housing is covered by a housing cover from above, and a battery receiving chamber is defined between the upper surface of the housing cover and an upper cover covering the housing cover from above. When the battery is received in the battery receiving chamber, a mower side connector fixed to a central part of the bottom surface of the battery receiving chamber is electrically connected to a battery side connector fixed to the bottom end of the battery.

In conventional mowers such as the one disclosed in JP2010-124697A, the connectors can be automatically connected to each other as the battery is placed into the battery receiving chamber, but some care is required to align the connectors to each other when placing the battery into the battery receiving chamber. This is not easy because of a significant weight of the battery. If the connectors are connected to each other without proper alignment, the connectors, in particular the contact pieces thereof may be damaged or excessively deformed.

Document US 6,056,077 A, which is considered to be closest prior art, discloses a battery powered vehicle according to the preamble of claim 1. Furthermore, documents US 2004/031632 A1, EP 2 534 937 A1 and US 2004/157117 A1 shall be mentioned at this point.

### SUMMARY OF THE INVENTION

In view of such a problem of the prior art, a primary object of the present invention is to provide electric power equipment with a removable battery in which the battery can be placed into a battery receiving recess in proper alignment without any difficulty.

To achieve such an object, the present invention provides electric power equipment according to claim 1.

Thus, when the battery is placed into the battery receiving recess, the guided members are guided by the section of the guide rails so as to laterally align the battery with respect to the battery receiving recess. Therefore, the battery side connector and the power equipment side connector can be aligned with each other correctly in an effortless manner.

The power equipment side connector is supported by the battery tray so as to be laterally moveable.

Thereby, the alignment between the battery side connector and the power equipment side connector can be accomplished in an even more accurate manner.

According to a preferred embodiment of the present invention, the guide rails are provided with respective guide surfaces that face away from each other, and the guided members are provided with respective guided surfaces that oppose each other.

Preferably, a spacing between the guide rails in the section that guide the guided members progressively increases from a first end of the section on a side of the first end of the battery receiving recess to a second end of the section on a side of the second end of the battery receiving recess, the spacing between the guide rails at the second end of the section being substantially equal to a corresponding spacing between the guided members.

Thereby, the alignment between the battery side connector and the power equipment side connector can be accomplished by using a highly simple and durable structure.

Preferably, the guided members include a pair of second guide ribs extending on the lower surface of the battery from an intermediate part of the lower surface of the battery toward the second end of the battery.

Thereby, the alignment between the battery side connector and the power equipment side connector can be accomplished in a particularly favorable manner.

Preferably, the second guide ribs are provided with extensions that extend along at least a part of an upright surface on the second end of the battery.

Thereby, the initial phase of placing the battery into the battery receiving recess can be accomplished with a minimum amount of friction.

Preferably, a spacing between the guide rails progressively increases from an intermediate part to the first end of the battery receiving recess, and the guided members include a pair of first guide ribs extending on the lower surface of the battery from an intermediate part of the lower surface of the battery toward the first end of the battery, the spacing between the guide rails in a first end side of the battery receiving recess being substantially equal to a corresponding spacing between the first guide ribs in a first end side of the battery, the first guide ribs and the guide rails overlapping each other in side view when the battery is received in the battery receiving recess.

Thereby, the alignment between the battery side connector and the power equipment side connector can be accomplished in a particularly favorable manner, and the battery can be retained in the battery receiving recess in a highly secure and stable manner.

According to another preferred embodiment of the present invention, the guide rails are provided with respective guide surfaces that oppose each other, and the guided members are provided with respective guided surfaces that face away from each other.

In this case also, the alignment between the battery side connector and the power equipment side connector can be accomplished by using a highly simple and durable structure.

Preferably, the upper surfaces of the guide rails are configured to support the lower surface of the battery.

Thereby, the battery can be moved along the guide rail with a small friction.

The upper surfaces of the guide rails may be slanted downward toward the second end of the battery receiving recess.

Thereby, the battery can be fully received, and the connectors can be connected to each other in a reliable and effortless manner.

Preferably, the power equipment side connector is provided with a pair of power equipment side projections, and the battery side connector is provided with a pair of battery side projections corresponding to the respective power equipment side projections, the battery side projections being provided with guide side surfaces that are configured to cooperate with guided side surfaces of the power equipment side projections so as to laterally align the battery side connector and the power equipment side connector to each other.

This allows the alignment between the battery side connector and the power equipment side connector to be accomplished in an even more accurate manner.

The electric power equipment may further comprise an engagement portion provided in a lower part of the second end of the battery receiving recess, and a corresponding engagement portion provided in a lower part of the second end of the battery, the corresponding engagement portion being configured to be engaged by the engagement portion of the battery receiving recess against a vertical movement.

Thereby, the vertical movement of the second end of the battery can be favorably retained so that the vertical alignment between the battery side connector and the power equipment side connector can be accomplished at the same time.

For the convenience of handling the battery, a grip may be provided at the first end of the battery.

The present invention thus provides electric power equipment with a removable battery in which the battery can be placed into a battery receiving recess in proper alignment without any difficulty.

### BRIEF DESCRIPTION OF THE DRAWINGS

Figure 1 is a perspective view of an electric mower according to the present invention;
Figure 2 is a sectional view taken along line II - II of Figure 1;
Figure 3 is a plan view of a battery tray of the electric mower;
Figure 4 is a sectional view taken along line IV - IV of Figure 3;
Figure 5 is a plan view of a mower side connector;
Figure 6 is a perspective view of a battery of the electric mower;
Figure 7 is a bottom view of the battery;
Figure 8 is a sectional view taken along line VIII - VIII of Figure 7;
Figure 9 is a perspective view of a battery side connector;
Figure 10 is a perspective view of the battery received in a battery receiving recess of the mower;
Figure 11 is a sectional view taken along line XI - XI of Figure 10;
Figure 12 is a side view showing the battery as being removed from the battery receiving recess;
Figure 13 is a fragmentary side view showing a front end part of the battery as being removed from the battery receiving recess;
Figure 14 is a perspective view of the mower when the battery is being placed into the battery receiving recess;
Figure 15 is a side view showing the battery in an early phase of being placed into the battery receiving recess;
Figure 16a, Figure 16b and Figure 16c are sectional views taken along line XVIa-XVIa, XVIb-XVIb and XVIc-XVIc of Figure 15, respectively;
Figure 17 is a simplified plan view of the battery tray of the mower;
Figure 18 is a side view showing the battery in a final phase of being placed into the battery receiving recess;
Figure 19 is a sectional view taken along line XIX - XIX of Figure 18;
Figures 20a to Figure 20d are fragmentary bottom views of the connectors in the process of being connected to each other;
Figure 21 is a view similar to Figure 7 showing a battery of a second embodiment;
Figure 22 is a view similar to Figure 17 showing a battery receiving recess of the second embodiment; and
Figure 23 is a view similar to Figure 16a showing the relationship between guide rails and guide ribs of the second embodiment.

### DESCRIPTION OF THE PREFERRED EMBODIMENT(S)

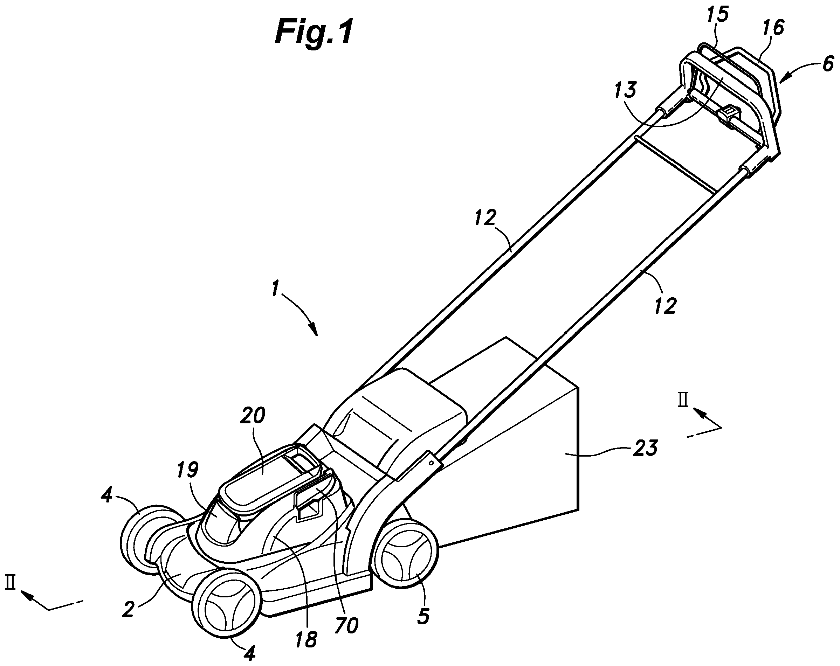

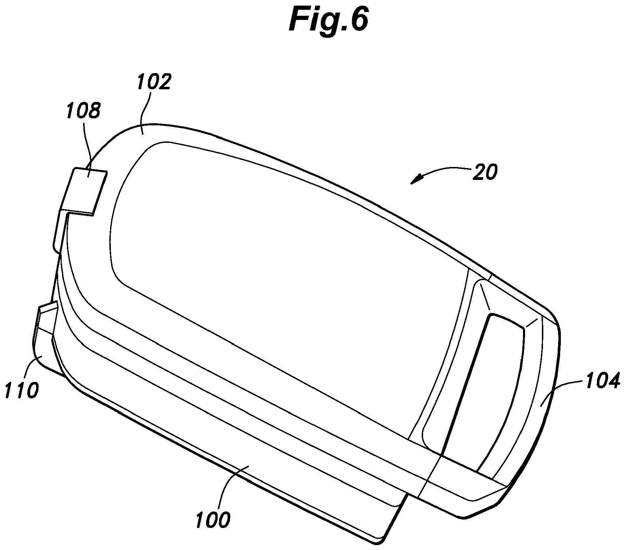

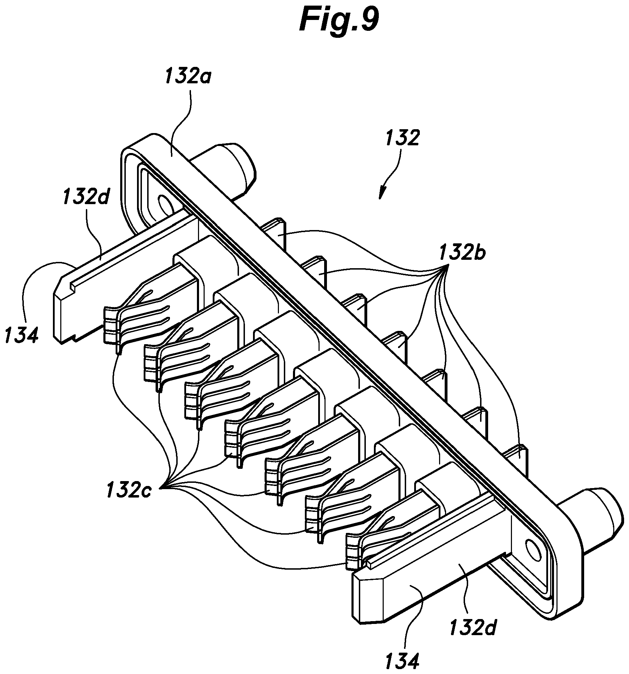

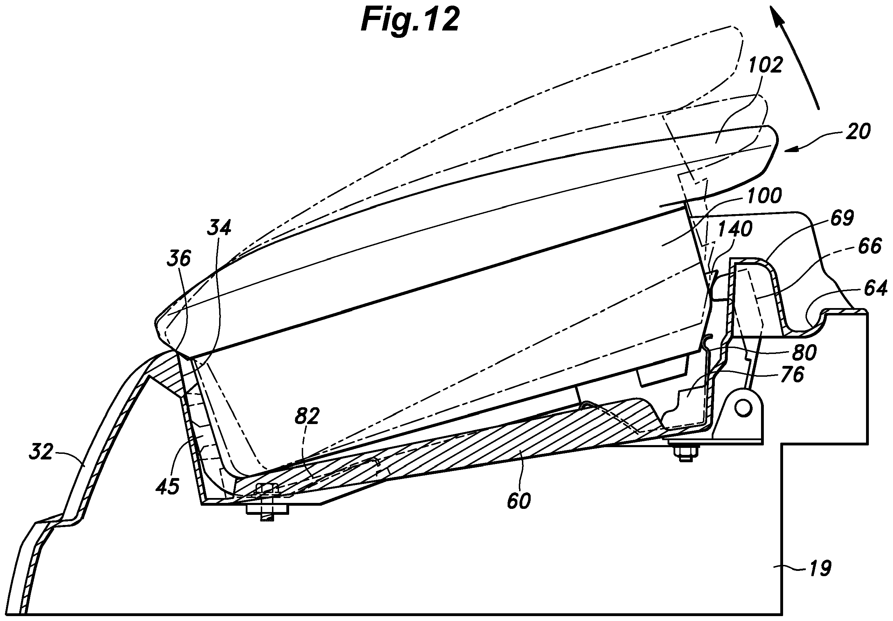

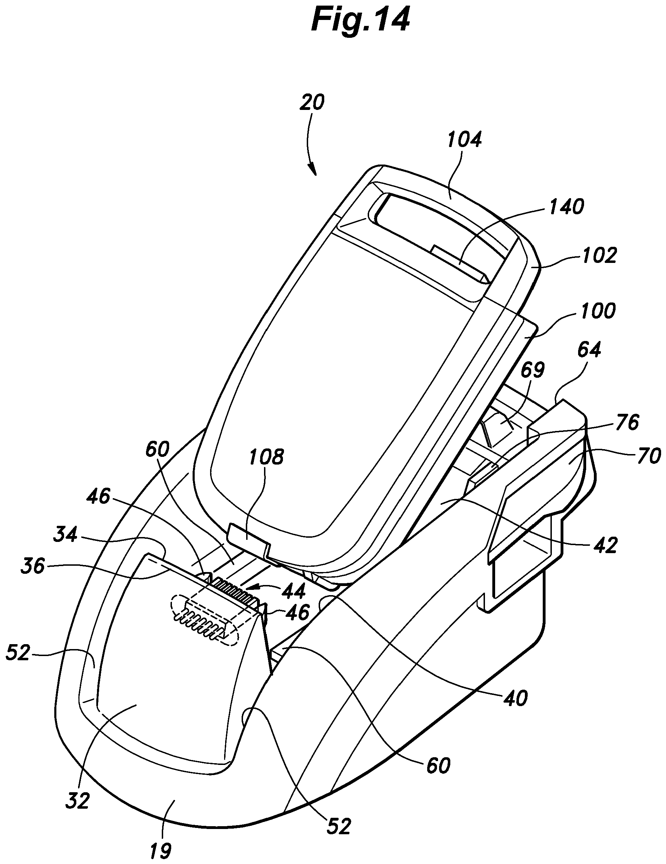

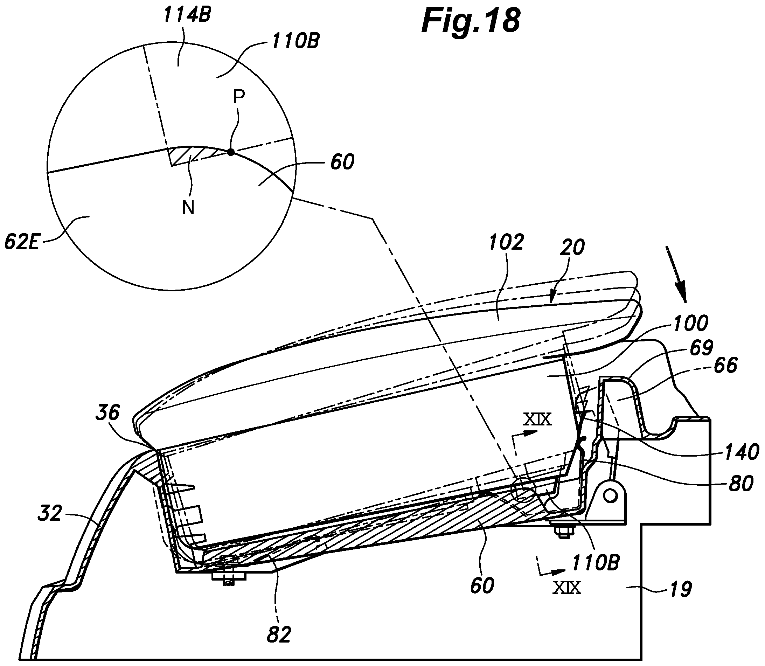

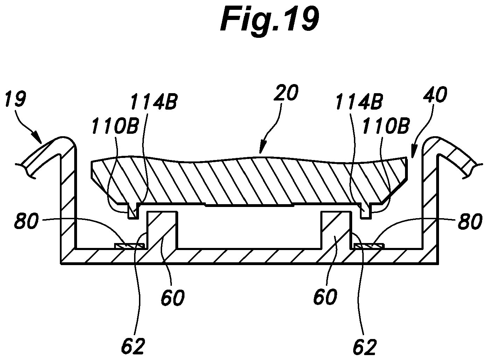

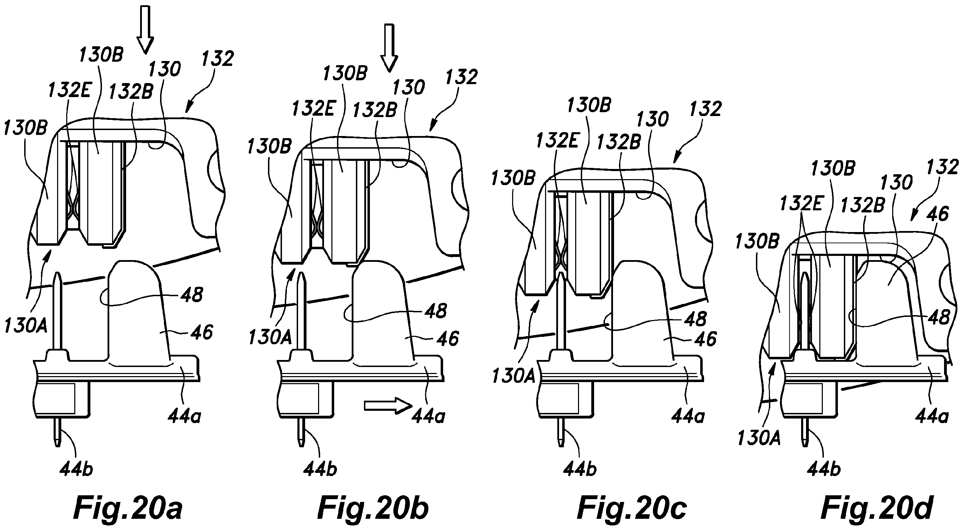

An electric mower embodying the present invention is described in the following with reference to Figures 1 to 20.

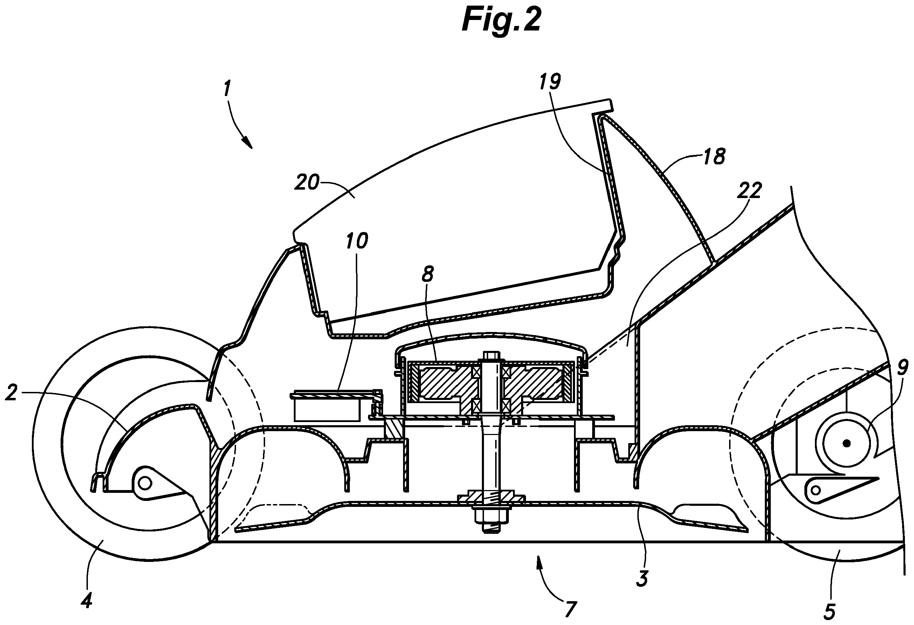

As shown in Figures 1 and 2, the electric mower 1 according to the present embodiment includes a main body 2, a blade 3 rotatably supported in a cavity 7 defined in a lower part of the main body 2, a pair of front wheels 4 supported by the main body 2, a pair of rear wheels 5 supported by the main body 2, and a handle 6 extending rearward and upward from the main body 2. A blade motor 8 having the blade 3 coupled to an output shaft thereof and a travel motor 9 for driving the rear wheels 5 are supported by the main body 2. Both the blade motor 8 and the travel motor 9 consist of electric motors, and the main body 2 is provided with a control unit 10 for controlling these motors.

The handle 6 is provided with a pair side rods 12 extending rearward and upward from either side end of a rear part of the main body 2, and a cross rod 13 extending between the rear ends of the side rods 12. The cross rod 13 of the handle 6 is provided with a travel lever 15 for operating the travel motor 9 and a blade lever 16 for operating the blade motor 8.

The blade motor 8, the travel motors 9, and the control unit 10 are provided on an upper part of the main body 2, and covered by an upper cover 18. A battery tray 19 defining a battery receiving recess 40 is formed in the upper cover 18 to removably receive a battery 20 for supplying electric power to the motors 8 and 9 and the control unit 10.

A chute 22 extends rearward from the cavity 7 to a rear end part of the main body 2, and a grass bag 23 is attached to the rear end part of the main body 2 so as to close a rear opening of the chute 22. The grass cut by the blade 3 is discharged rearward from the cavity 7 through the chute 22 and collected in the grass bag 23.

As shown in Figures 2 to 4, the battery receiving recess 40 defined by the battery tray 19 is provided with an open side facing upward. The battery receiving recess 40 has a substantially rectangular periphery somewhat elongated in the fore and aft direction, and is symmetrical with respect to a central vertical plane X extending in the fore and aft direction.

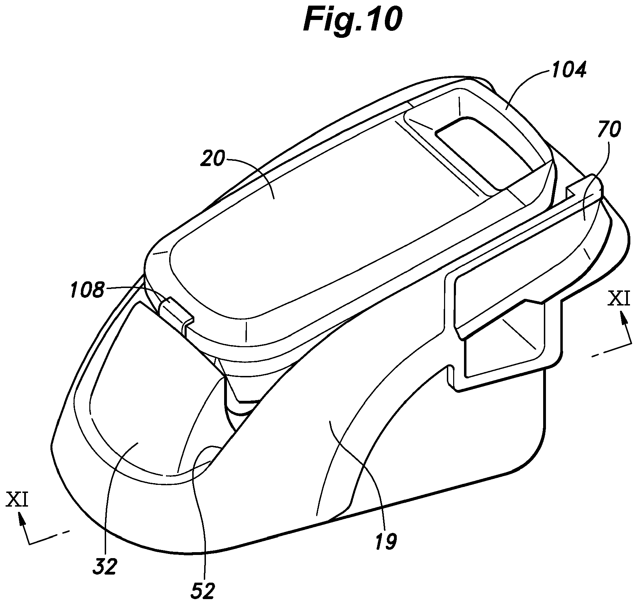

A front part 32 of the upper cover 18 projects upward, and includes a front wall defining a streamlined front end of the mower main body 2 and a rear wall extending substantially vertically (with a forward slant) and defining an abutting surface 34 for supporting a front end of the battery 20 as will be discussed hereinafter. The front part 32 of the upper cover 18 is provided with a pair of side walls extending between the front wall and the rear wall, and each side wall is slightly spaced from the opposing inner wall of the battery tray 19 so as to define a slot 52 extending in the fore and aft direction (Figure 10). The upper end of the abutting surface 34 is smoothly connected to the front surface of the front part 32 via a rounded corner 36 (an upward projection) in side view.

The battery receiving recess 40 for receiving the battery 20 is thus defined by the abutting surface 34, a pair of side wall surfaces, a rear wall surface and a bottom wall surface 42. The bottom wall surface 42 is slightly slanted toward the front end thereof. The battery receiving recess 40 and the bottom wall surface 42 are also symmetric relative to the central vertical plane X.

The front wall of the battery receiving recess 40 is provided with a mower side connector 44 in a central part thereof.

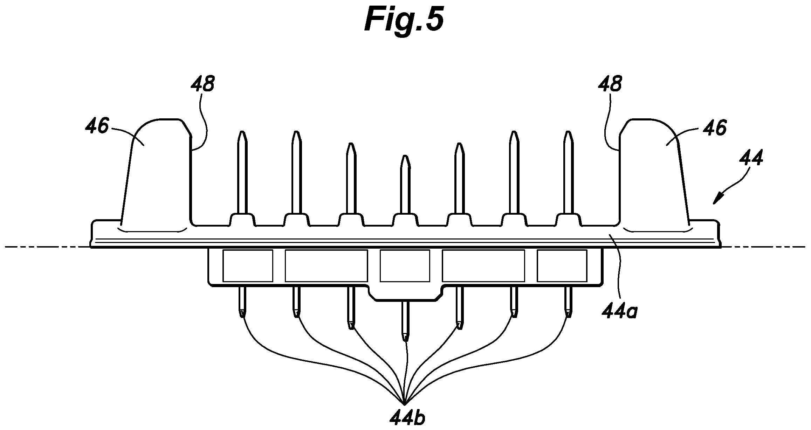

As shown in Figure 5, the mower side connector 44 includes a base member 44a which is made of insulating material and has a laterally elongated rectangular shape. The base member 44a is essentially a plate member which is supported by the rear wall of the front part 32 so as to be slightly movable in the lateral direction, but is otherwise fixed in position relative to the rear wall of the front part 32 (a floating support). A plurality (seven, in the illustrated embodiment) of power receiving terminal pieces 44b are passed through the base member 44a and arranged in a single row at a regular interval in the lateral direction.

A pair of terminal guide projections 46 project rearward from either lateral end of the base member 44a, and mutually opposing surfaces of the terminal guide projections 46 are formed as guide surfaces 48 which are rounded or tapered in free end parts thereof.

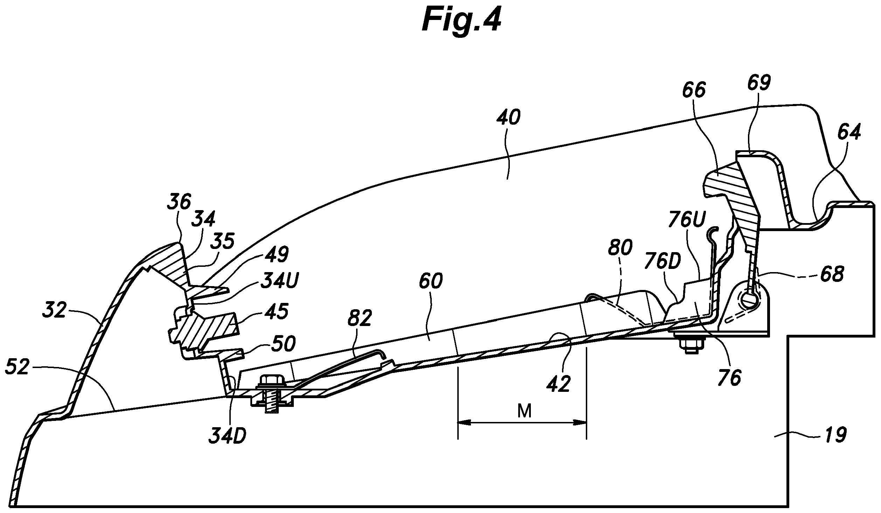

As shown in Figure 4, a vertically middle part of the rear wall of the front part 32 is provided with an upwardly facing and laterally extending shoulder surface so that the abutting surface 34 includes an upper part 34U and a lower part 34D, the lower part 34D being positioned more rearward than the upper part 34U so as to define the upwardly facing shoulder surface. A laterally extending rib 50 projects rearward so as to define an upper surface which is an extension of the shoulder surface defined between the lower part 34D and the upper part 34U of the abutting surface 34. The terminal pieces 44b are positioned slightly above the shoulder surface. A laterally extending rib 49 similar to the rib 50 projects rearward from a part of the abutting surface 34 positioned slightly above the terminal pieces 44b.

As shown in Figure 4, the bottom wall surface 42 is formed in a substantially rectangular shape somewhat elongated in the fore and aft direction, and slants downward toward the front end thereof. Further, the bottom surface of the slots 52 is connected continuously to the bottom wall surface 42 so that water that may be deposited in the battery receiving recess 40 can be readily drained from the battery receiving recess 40 via the slots 52.

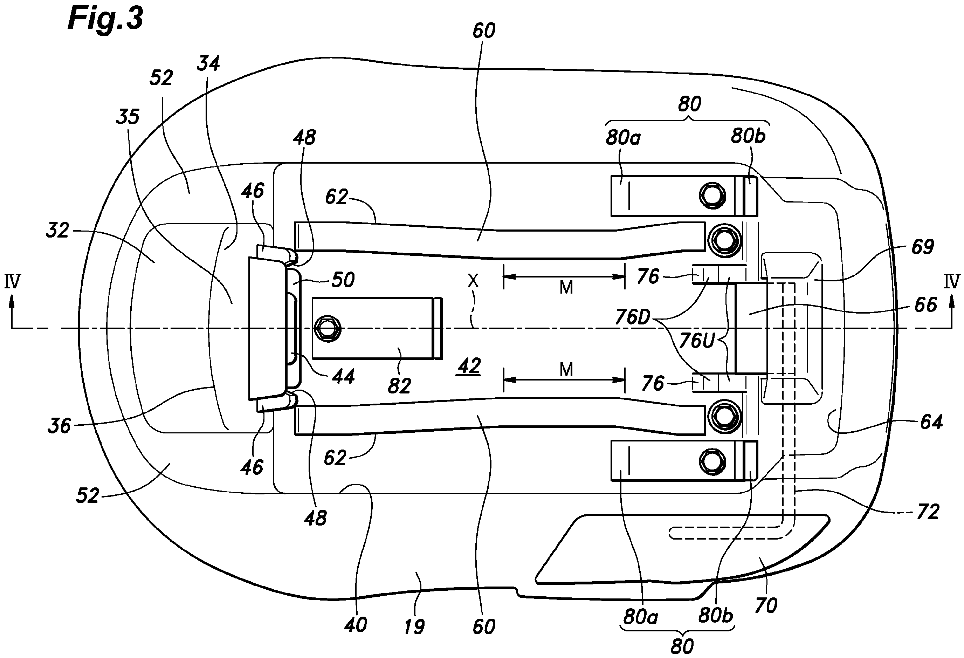

As shown in Figure 3, the bottom wall surface 42 is provided with a pair of guide rails 60 extending in the fore and aft direction from a vicinity of the front end of the bottom wall surface 42 to a vicinity of the rear end of the bottom wall surface 42. The left and right guide rails 60 are mirror images of each other about the central vertical plane X in plan view, and an outer side surface (facing outward) of each guide rail 60 serves as a guide surface 62. The two guide rails 60 are parallel to each other in an intermediate region M of the bottom wall surface 42 with respect to the fore and aft direction. The parts of the guide rails 60 in a front end region of the bottom wall surface 42 progressively spread apart toward the front ends thereof, and the parts of the guide rails 60 in a rear end region of the bottom wall surface 42 also progressively spread apart toward the rear ends thereof. More importantly, the guide surfaces 62 of the two guide rails 60 are parallel to each other in the intermediate region M, progressively spread apart toward the front in the front end region, and progressively spread apart toward the rear in the rear end region.

As shown in Figure 4, the upper surfaces of the guide rails 60 both have a downward slope toward the front ends thereof in a similar manner as (in parallel with) the bottom wall surface 42.

As shown in Figure 4, the rear wall of the battery receiving recess 40 is centrally provided with an opening, and a latch member 66 is passed through the opening. The lower end of the latch member 66 which is positioned outside of the rear wall is pivotally supported at the base end around a laterally extending pivot center line, and the upper end of the latch member 66 which is positioned inside of the rear wall is provided with a locking claw projecting forward. The latch member 66 is resiliently urged by a torsion coil spring 68 provided at the base end of the latch member 66 in a direction to urge the locking claw in the forward direction. A rear recess 64 is formed in a part of the upper cover 18 immediately behind the latch member 66. A rear part 69 of the upper cover 18 projects upward from the rear recess 64 and is connected to the rear wall of the battery tray 19.

As shown in Figures 1 and 3, a battery removal lever 70 is provided on a rear part of an upper left side part of the upper cover 18 adjoining a rear end of the battery tray 19. The battery removal lever 70 is connected to the latch member 66 via a link mechanism 72 so that the locking claw at the upper end of the latch member 66 can be moved rearward against the biasing force of the torsion coil spring 68 by pressing down a rear end part of the battery removal lever 70.

As shown in Figures 3 and 4, a pair of battery supporting protrusions 76 elongated in the fore and aft direction project from a rear end part of the bottom wall surface 42 (the bottom surface of the battery receiving recess 40) in a laterally spaced apart relationship in symmetry about the central vertical plane X. The rear end of each battery supporting protrusion 76 is connected to the rear wall of the battery tray 19. The battery supporting protrusions 76 extend inside the guide rails 60 in a slightly overlapping relationship in side view. Each battery supporting protrusion 76 has a stepped upper surface including a high part 76U adjacent to the rear end thereof and a low part 76D in the front end thereof. The high part 76U is substantially at the same height as the guide rails 60, and the low part 76D is at about one half of the height of the guide rails 60.

A pair of first sheet spring members 80 (first spring members) are provided on either side of rear end parts of the guide rails 60. The first sheet spring members 80 are each attached to the bottom wall surface 42 by a screw in a middle part thereof, and provided with a front end 80a expending obliquely upward toward the front and a rear end 80b extending upright. Therefore, when the battery 20 is received in the battery receiving recess 40, the front ends 80a of the first sheet spring members 80 urge the battery 20 upward, and the rear ends 80b of the first sheet spring members 80 urge the battery 20 forward.

A second sheet spring member 82 (second spring member) is provided centrally in a front end part of the bottom wall surface 42 of the battery receiving recess 40. The second sheet spring member 82 is elongated in the fore and aft direction, and is provided with a front end attached to the bottom wall surface 42 by a screw and a rear end extending upward and rearward toward the rear. The second sheet spring member 82 fully overlaps with the guide rails 60 in side view as shown in Figure 4.

As shown in Figure 1, the battery 20 is substantially rectangular in shape, and slightly elongated in the fore and aft direction. The battery 20 is essentially symmetric about a central vertical plane Y extending in the fore and aft direction. The central vertical plane Y of the battery 20 coincides with the central vertical plane X of the mower main body 2 when the battery 20 is received in the battery receiving recess 40.

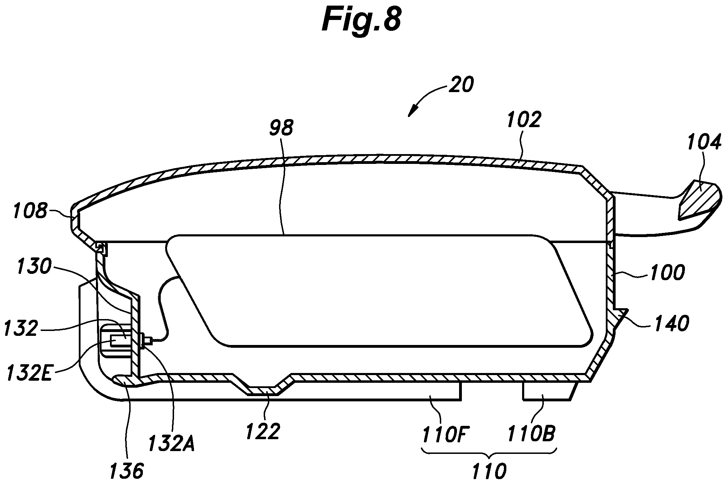

As shown in Figure 8, the battery 20 includes a battery housing 100 formed as a rectangular container with an open top, and accommodating battery cells 98 therein.

The battery 20 further includes a battery cover 102 closing the open upper end of the battery housing 100. The rear end of the battery cover 102 is provided with a grip 104 extending rearward and forming a loop. The upper front end of the battery cover 102 protrudes forward in side view which is now referred to as nose 108. In particular, the nose 108 presents a smooth protrusion projecting forward, and overhangs the front end part of the battery housing 100.

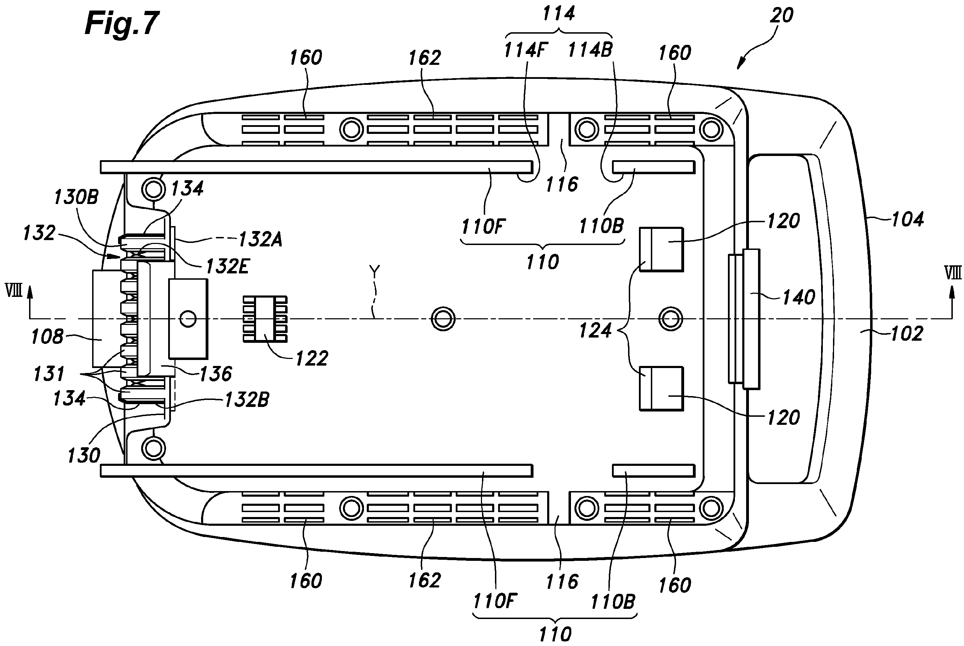

As shown in Figures 7 and 8, the lower surface of the battery housing 100 is provided with a pair of guide ribs 110 extending linearly in the fore and aft direction in parallel to each other. The guide ribs 110 are positioned so that the inner surfaces of these guide ribs 110 (that oppose each other) serve as guided surfaces 114 that cooperate with the respective guide surfaces of the guide rails 60. There is a break in each guide rib 110 in a rear part thereof, separating the guide rib 110 into a front guide rib 110F and a rear guide rib 110B which are aligned to each other. Each rear guide rib 110B extends between the break and a rear edge of the bottom wall of the battery housing 100. Each front guide rib 110F extends from the break to the front edge of the bottom wall of the battery housing 100, and to an upper edge of the front wall of the battery housing 100 in a continuous manner. Thus, each front guide rib 110F includes a horizontal section extending along the bottom wall of the battery housing 100 and a vertical section extending along the front wall of the battery housing 100 in a smooth continuation.

The break in each guide rib 110 is positioned and dimensioned so that the corresponding first sheet spring member 80 does not interfere with the guide rib 110 when the battery 20 is placed into and removed from the battery receiving recess 40. Each guide rib 110 has a substantially uniform height over the entire length thereof (including the front guide rib 110F and the rear guide rib 110B), the height thereof being smaller than the height of the guide rails 60.

A pair of first bottom surface engaging portions 120 project from a rear end part of the lower surface of the battery 20 laterally next to each other in a symmetric manner about the central vertical plane Y, and are positioned between the two rear guide ribs 110B. The front end of each first bottom surface engaging portion 120 consists of a sloping surface, and the rear end of the first bottom surface engaging portion 120 consists of an upright wall surface. The main part of each first bottom surface engaging portion 120 defines a planar horizontal surface. The height of the first bottom surface engaging portions 120 is substantially equal to that of the rear guide ribs 110B.

These first bottom surface engaging portions 120 are configured to be supported by the upper surfaces of the lower parts 76U of the battery supporting protrusions 76, respectively, when the battery 20 is fully received in the battery receiving recess 40.

A second bottom surface engaging portion 122 having a rectangular shape in plan view projects centrally from a front end part of the lower surface of the battery 20. The second bottom surface engaging portion 122 includes a sloping front wall, a planar and horizontal main part and a sloping rear wall, and the main part has a substantially same height as the guide ribs 110. The sloping front wall and the sloping rear wall are defined by a plurality of ribs extending in the fore and aft direction. The second bottom surface engaging portion 122 is positioned so that the rear end of the second sheet spring member 82 engages the planar main part of the second bottom surface engaging portion 122 when the battery 20 is fully received in the battery receiving recess 40.

As shown in Figure 8, a lower part of the front wall of the battery housing 100 is centrally provided with a recess 130 which is recessed rearward (or inward). The rear wall (bottom wall) of the recess 130 is provided with a plurality of small rectangular openings arranged laterally, and projections 131 project from the respective parts of the rear wall of the recess 130 located between the adjoining rectangular openings.

A battery side connector 132 is attached to the bottom wall of the recess 130 from inside the battery housing 100. The battery side connector 132 includes a base member 132a made of electrically insulating material and having the shape of a laterally elongated plate member, and a plurality of terminal pieces 132b passed through the base member 132a and arranged in a single row along the length of the base member 132a. The base member 132a is attached to the rear wall of the recess 130 from behind. Front end 132c of each terminal piece 132b consists of a pair of sheet springs configured to resiliently accept the corresponding one of the terminal pieces 44b of the mower side connector 44 between the sheet springs. The rear end of each terminal piece 132b is formed as a connecting piece to which a lead wire is connected by soldering (although not shown in the drawings). The front ends 132c of the terminal pieces 132b are passed through the respective rectangular openings in the rear wall of the recess 130.

A pair of guide pieces 132d extend forward from either lateral end of the base member 132a, and are passed through corresponding openings in the rear wall of the recess 130. An outer surface of each guide piece 132d defines a guide surface 134. The guide pieces 132d extend beyond the free ends of the front ends 132c of the terminal pieces 132b, and extend from the rear wall of the recess 130 by about a same length as the projections 131. The outer side of the free end of each guide piece 132d is chamfered. In other words, the free end of each guide surface 134 is formed as a sloping surface.

A lower part of the front end of the battery housing 100 is provided with a front engagement portion 136 consisting of a rib projecting forward, and extending along the lower edge of the front part of the battery housing 100. The front engagement portion 136 substantially vertically aligns with the battery side connector 132 with a certain spacing defined between the projections 131 and the front engagement portion 136.

A rear engagement portion 140 projects rearward from the rear end of the battery housing 100, and defines an upwardly facing and laterally elongated shoulder surface. In particular, the rear engagement portion 140 is configured to be engaged by the locking claw of the latch member 66 as will be discussed hereinafter.

The lower surface of the battery housing 100 is connected to each side surface of the battery housing 100 via a smooth curved contour in a continuous manner. A laterally extending rib 116 extends in this curved region between the lower surface and each side surface of the battery housing 100 in a position corresponding to the break between the front guide rib 110F and the rear guide rib 110 on the corresponding side.

The curved region between the lower surface and each side surface of the battery housing 100 is further provided with a plurality of inlet openings 160 and outlet openings 162 for introducing and removing external air into and out of the battery housing 100, respectively, for cooling the battery cells 98 therein.

The mode of operation of the electric mower 1, in particular the mode of installing and removing the battery 20 into and out of the battery receiving recess 40 of the battery tray 19 is described in the following.

During normal operation of the electric mower 1, the battery 20 is received in the battery receiving recess 40 of the battery tray 19 as shown in Figure 1.

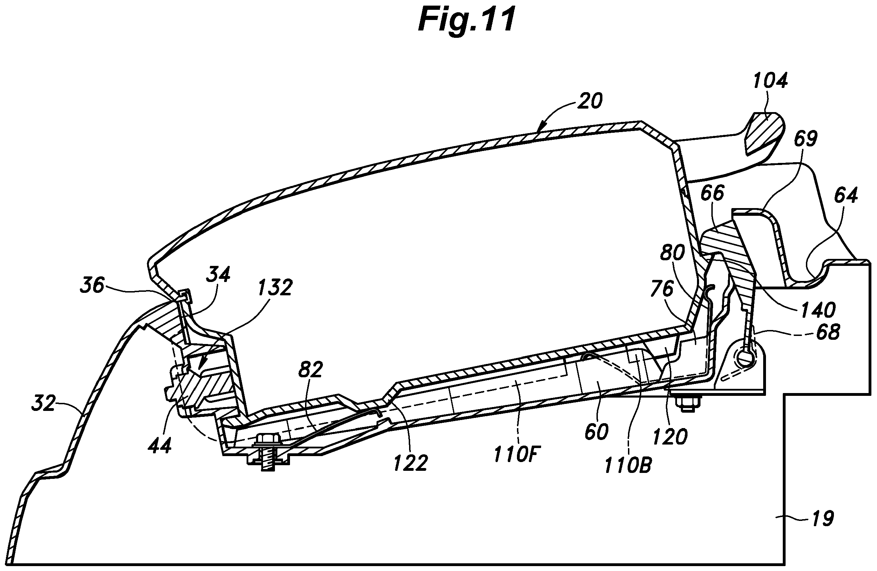

As shown in Figures 10 and 11, when the battery 20 is received in the battery receiving recess 40, the grip 104 of the battery 20 is received in the rear recess 64. At this time, the lower surface of the battery housing 100 abuts the upper surface of the guide rails 60, and the outer surfaces or the guide surfaces 62 of the guide rails 60 are interposed between the guided surfaces 114 of the guide ribs 110. The battery side connector 132 is electrically connected to the mower side connector 44.

Further, the front ends 80a of the first sheet spring members 80 abut the lower surface of the battery to urge the battery 20 upward, and the rear ends 80b of the first sheet spring members 80 abut the rear end surface of the battery housing 100 to urge the battery 20 forward. The second sheet spring member 82 abuts the lower surface of the main part of the second bottom surface engaging portion 122 to urge the battery 20 upward. The front engagement portion 136 of the battery housing 100 is engaged by the rib 50 projecting from the rear wall of the front part 32. Thus, the battery 20 is firmly retained in the battery receiving recess 40.

When the battery 20 becomes low in charge, the battery 20 is removed by a user.

At this time, the user depresses the battery removal lever 70, and this causes the locking claw of the latch member 66 to move rearward against the spring force of the torsion coil spring 68, and disengages the rear engagement portion 140 of the battery housing 100. As a result, the rear portion of the battery 20 pops up under the spring force of the front ends of the first sheet spring members 80.

The user then holds the grip 104 of the battery 20 and lifts the rear end of the battery 20 until the rear end of the battery 20 clears the rear edge of the battery receiving recess 40. At this time, the underside of the nose 108 of the battery 20 rolls over the rounded corner 36. As a result, the front engagement portion 136 of the battery housing 100 is disengaged from the rib 50 projecting from the rear wall of the front part 32.

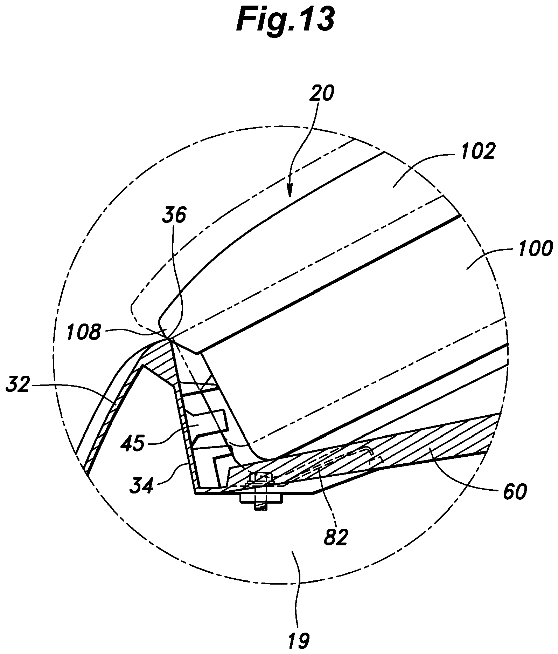

As shown in Figure 13, owing to the forward slanting of the curved lower surface of the nose 108 of the battery 20, as the rear end of the battery 20 is lifted, the lower front edge of the battery 20 slides over the lower surface of the battery receiving recess 40.

The user holding the grip 104 pulls the battery 20 rearward, and eventually raises the battery 20 out of the battery receiving recess 40. In this manner, the battery 20 transitions from the substantially horizontal position to the upright position simply by pulling the battery 20 rearward so that the user is enabled to lift the battery 20 in a relatively effortless manner.

When placing the battery 20 in the battery receiving recess 40, the user suspends the battery 20 by holding the grip 104, and drops the front end of the battery 20 onto the bottom wall surface 42 of the battery receiving recess 40. The user then pushes the grip 104 forward while lowering the rear end of the battery 20.

At this time, the guided surfaces 114 of the guide ribs 110 of the battery 20 are guided by the guide surfaces 62 of the guide rails 60 so that the battery 20 is properly centered in the battery receiving recess 40.

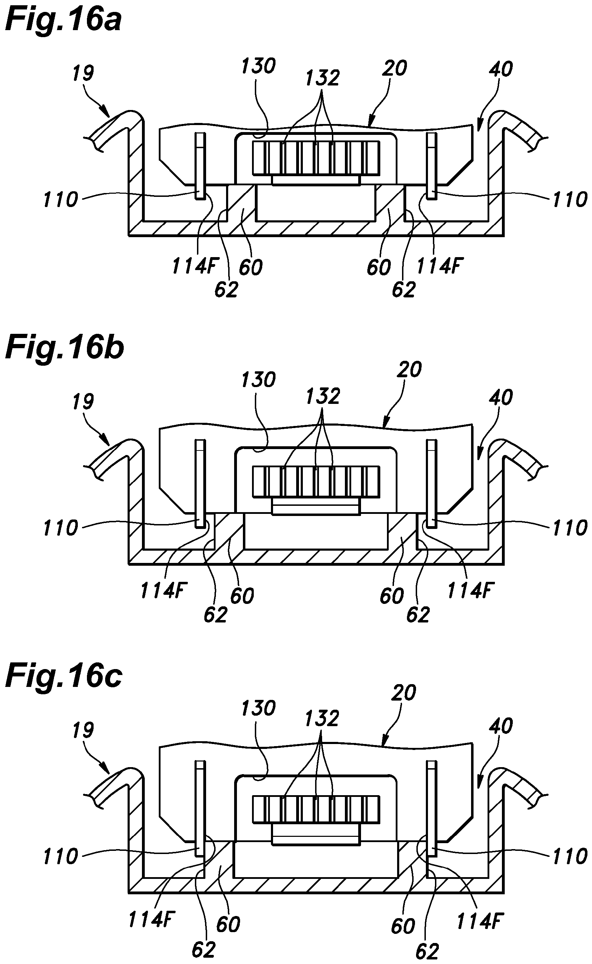

As shown in Figure 16a, when the front end of the battery 20 is positioned in a middle part of the battery receiving recess 40 with respect to the fore and aft direction, in the region where the guide rails 60 and the guide ribs 110 are overlapping each other in side view, the spacing between the guide surfaces 62 of the guide rail 60 is significantly greater than the spacing between the guided surfaces 114 of the guide ribs 110. Therefore, when the front end of the battery 20 is dropped into the battery receiving recess 40, the guide rails 60 can be correctly interposed between the guide ribs 110 without any difficulty. As the front end of the battery 20 is pushed forward, the parts of the guide rails 60 interposed between the parts of the guide ribs 110 located in the front end part of the battery 20 become progressively more spaced apart from each other as shown in Figures 16b and Figure 16c. Therefore, the battery 20 is correctly centered in the battery receiving recess 40 as the battery 20 is pushed forward in an effortless manner.

When the battery 20 is pushed forward until the front engagement portion 136 of the battery 20 is positioned under the rib 50, and the rear end of the battery 20 is lowered, the rear engagement portion 140 starts riding over the locking claw of the latch member 66.

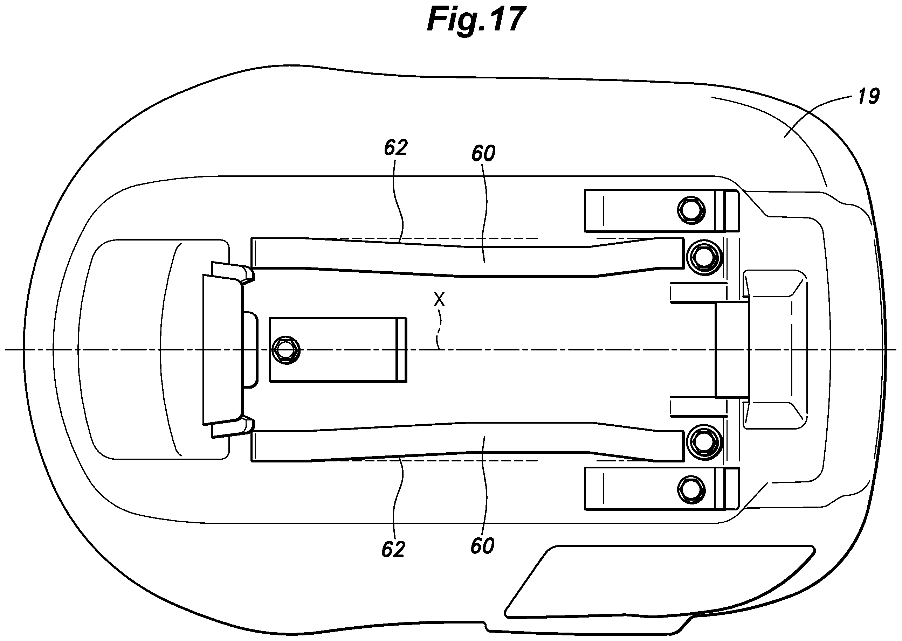

As shown in Figure 17, the spacing between the guide rails 60 increases from an intermediate part to the rear end of the battery receiving recess 40. Therefore, as the rear end part of the battery 20 descends, the front end parts of the rear guide ribs 110B interpose a relatively spread apart part of the guide rails 60. Therefore, a small region N where the guide ribs and the guide rails overlap each other in side view is created. As the rear end part of the battery 20 descends further, an increasing larger part of the rear guide ribs 110B overlap with the guide rails 60 in side view or the region N increases in size. In this case also, the guide rails 60 can be interposed between the rear guide ribs 110B without any difficulty, and the rear end part of the battery 20 can be centered in an accurate manner as the rear end of the battery 20 descends further into the battery receiving recess 40.

Figure 17 shows extensions of the rear ends of the guide surfaces drawing in the forward direction in chain-dot lines. It can be appreciated that as the overlapping region N expands in the rearward direction, the gap between the guide surfaces 62 of the guide rails 60 and the guided surfaces 114 of the guide ribs 110 diminishes.

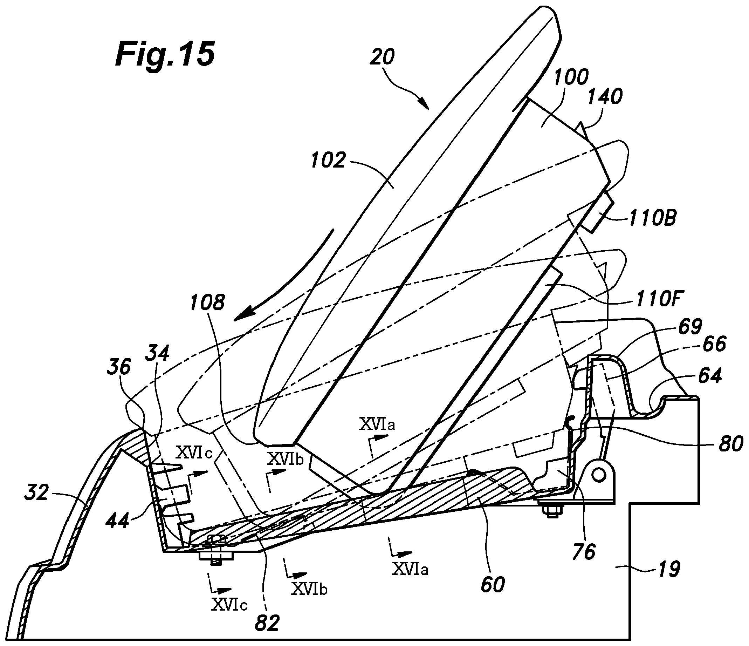

As shown in Figure 15, as the front end of the bottom part of the battery 20 slides forward along the upper surfaces of the guide rails 60, the battery side connector 132 is pushed against the mower side connector 44. Owing to the guiding action achieved by the cooperation between the guide surfaces 62 of the guide rails 60 and the guided surfaces 114 of the guide ribs 110, the two connectors 44 and 132 can be connected to each other in proper alignment.

In the final phase of placing the battery 20 in the battery receiving recess 40, the rear engagement portion 140 rides over the locking claw of the latch member against the spring force of the torsion coil spring 68, and the locking claw engages the shoulder surface of the rear engagement portion 140 under the spring force of the torsion coil spring 68.

When the battery 20 is thus fully received in the battery receiving recess 40, as shown in Figure 16, the front guide ribs 110F and the rear guide ribs 110B are restrained laterally by the corresponding parts of the guide rails 60 so that the battery 20 does not shift laterally. Because the front engagement portion 136 of the battery 20 is engaged by the rib 50 projecting from the rear wall of the front part 32, and the second bottom surface engaging portion 122 is urged upward by the second sheet spring member 82, the front end of the battery 20 is prevented from moving in the vertical direction. Additionally, the rear ends of the first sheet spring members 80 push the battery 20 in the forward direction, and this also contributes to the firm engagement between the front engagement portion 136 and the rib 50.

Because the rear engagement portion 140 is engaged by the locking claw of the latch member 66, and the lower surface of the rear end part of the battery 20 is urged upward by the front ends 80a of the first sheet spring members 80, the rear end of the battery 20 is prevented from moving in the vertical direction.

The advantages of the electric mower 1 of the illustrated embodiment are discussed in the following.

When placing the battery 20 into the battery receiving recess 40, the front part of the battery 20 is automatically centered with respect to the battery receiving recess, and is properly positioned. As the rear end of the battery 20 is lowered into the battery receiving recess 40, the rear part of the battery 20 is also automatically centered with respect to the battery receiving recess 40. Therefore, the mower side connector 44 and the battery side connector 132 are aligned to each other automatically as the battery 20 is placed into the battery receiving recess 40.

Because the mower side terminal 44 is supported via a floating support, even when the centering of the battery 20 with respect to the battery receiving recess 40 is not perfect and contains a slight offset, any such offset can be accommodated by the lateral movement of the mower side terminal 44. Therefore, a reliable electric connection is ensured between the mower side connector 44 and the battery side connector 132, and any wear or excessive deformation of the terminal pieces of the connectors can be minimized.

As the battery 20 is pushed forward in the battery receiving recess 40, the gaps between the guide rails 60 and the front guide ribs 110F decrease so that the front part of the battery 20 is effectively centered. Once the battery 20 is fully received in the battery receiving recess 40, substantially no lateral play is present between the battery 20 and the battery receiving recess 40 so that the front part of the battery 20 can be retained in a highly secure manner.

As the rear end of the battery 20 descends into the rear part of the battery receiving recess 40, the gaps between the guide rails 60 and the rear guide ribs 110B decrease so that the rear part of the battery 20 is effectively centered. Once the rear part of the battery 20 has fully descended into the battery receiving recess 40, the rear part of the battery 20 can be retained in a highly secure manner.

Once the rear part of the battery 20 has fully descended into the battery receiving recess 40, the rear part of the battery 20 is accurately centered in the battery receiving recess 40, and can be retained in a highly secure manner.

Since the guide rails 60 may extend substantially over the entire length of the battery receiving recess 40, the battery 20 can be retained in the battery receiving recess 40 in a secure manner even when the battery 20 is subjected to significant external forces.

As the battery 20 is pushed forward in the battery receiving recess 40, the lower surface of the battery 20 slides over the upper surfaces of the guide rails 60. Therefore, owing to the reduction in the contact surface area between the lower surface of the battery 20 and the bottom surface of the battery receiving recess 40, the friction between the battery 20 and the battery receiving recess 40 can be minimized.

Owing to the downward slant of the upper surfaces of the guide rails 60 toward the front, the gravitational force aids the forward movement of the battery 20 in the battery receiving recess so that the battery 20 can be placed into the battery receiving recess 40 in an effortless manner.

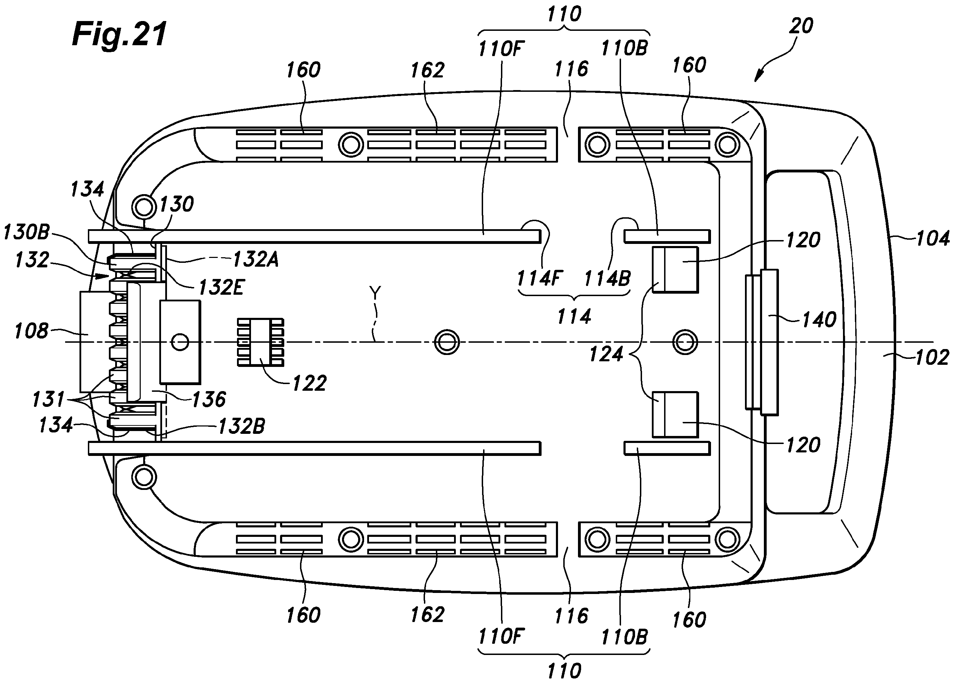

Figures 21 to 23 show an electric mower according to a second embodiment of the present invention. In the description of the second embodiment, the parts corresponding to those of the first embodiment are denoted with like numerals without necessarily repeating the description of such parts.

Guide rails 60 similar to those of the first embodiment and mirror images of each other about the central vertical plane X are provided with guide surfaces 62 facing each other. The guide rails 60 include an intermediate part where the guide rails 63 are parallel to each other. The front part of the guide rails 60 extend forward converging toward each other, and the front most part of the guide rails 60 extend in parallel to each other, in plan view in each case. The rear part of the guide rails 60 also extend rearward converging toward each other, and the rear most part of the guide rails 60 extend in parallel to each other, in plan view in each case.

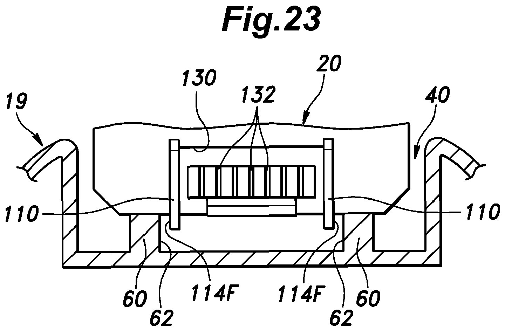

Figure 23 shows a front part of the battery 20 sliding over the upper surfaces of the guide rails 60. The guide surfaces 62 of the guide rails 60 are in sliding engagement with the guided surfaces 114F of the guide ribs 110 (front guide ribs 110F).

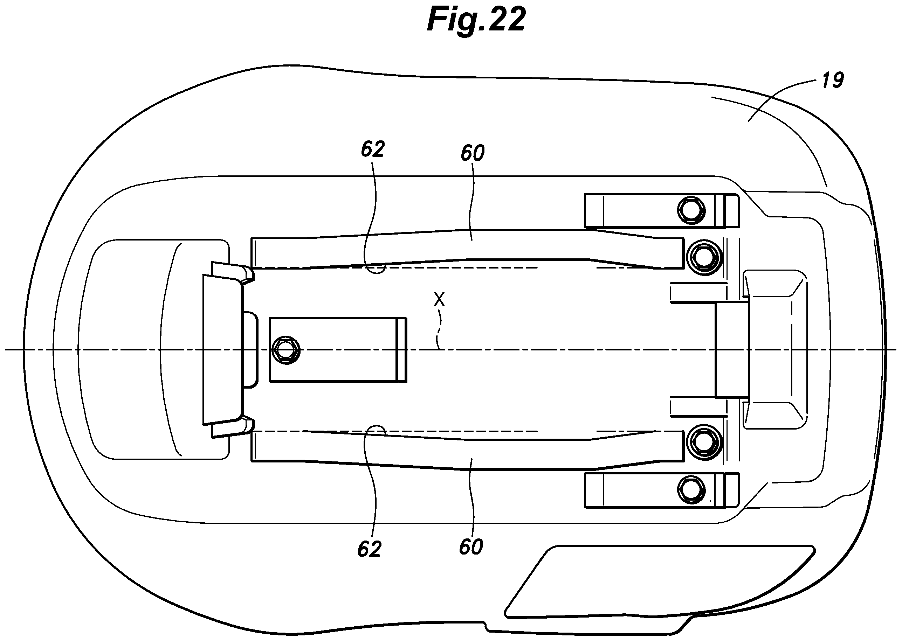

Figure 22 shows extensions of the front ends of the guide surfaces drawn in the rear direction in dotted lines, and extensions of the rear ends of the guide surfaces drawn in the forward direction in chain-dot lines.

Figure 21 shows a pair of guide ribs 110 extending on the lower surface of the battery 20 substantially over the entire length of the lower surface of the battery 20 in symmetry with respect to the central vertical plane Y of the battery 20. Each guide rib 110 is provided with a break in a rear part thereof. Each guide rib 110 includes a front guide rib 110F extending from the break in the guide rib 110 to the front end of the lower surface of the battery 20 and to an upper part of the front surface of the battery 20. The front guide ribs 110F are each provided with a guided surface 114F on an outer side thereof so as to cooperate with the guide surface 62 of the front part of the corresponding guide rail 60.

Each guide rib 110 additionally includes a rear guide rib 110B extending from the break in the guide rib 110 in the rear part of the lower surface of the battery 20 to the rear end of the lower surface of the battery 20. The rear guide ribs 110B are each provided with a guided surface 114B on an outer side thereof so as to cooperate with the guide surface 62 of the front part of the corresponding guide rail 60.

In this embodiment also, as the battery 20 is pushed forward in the battery receiving recess 40, the gaps between the guide rails 60 and the front guide ribs 110F decrease so that the front part of the battery 20 is effectively centered. Once the battery 20 is fully received in the battery receiving recess 40, substantially no lateral play is present between the battery 20 and the battery receiving recess 40 so that the front part of the battery 20 can be retained in a highly secure manner.

As the rear end of the battery 20 descends into the rear part of the battery receiving recess 40, the gaps between the guide rails 60 and the rear guide ribs 110B decrease so that the rear part of the battery 20 is effectively centered. Once the rear part of the battery 20 has fully descended into the battery receiving recess 40, the rear part of the battery 20 can be retained in a highly secure manner.

In the foregoing embodiments, each guide rib 110 was separated into the front guide rib 110F and the rear guide 110B via a break therebetween. However, each guide rib may consist of a single rib extending substantially over the entire length of the lower surface of the battery 20, or alternatively, may consist of a larger number of discrete ribs or projections. The same is true with the guide rails 60. In other words, the guide rails 60 may each consist of two or more discrete ribs or projections.

Although the present invention has been described in terms of a preferred embodiment thereof, it is obvious to a person skilled in the art that various alterations and modifications are possible without departing from the scope of the present invention.
A battery 20 of electric mower 1 is received in a battery receiving recess 40 of the electric mower. A battery side connector 132 is provided in a front end of the battery, and a mower side connector 44 is provided in a front end of the battery receiving recess, and configured to be electrically connected to the battery side connector when the front end of the battery is pushed against the front end of the battery receiving recess. A section of guide rails provided on the bottom surface of the battery receiving recess are configured to guide guide ribs provided on the lower surface of the battery so as to laterally align the battery with respect to the battery receiving recess as the battery is displaced toward the front end of the battery recess.

## Claims

1. Electric power equipment (1), comprising:
a battery tray (19) defining a battery receiving recess (40) having an open upper end, the battery receiving recess having a first end and a second end remote from the first end;
a battery (20) configured to be removably received in the battery receiving recess, the battery having a first end and a second end corresponding to the first end and the second end of the battery receiving recess, respectively;
a pair of guide rails (60) provided on a bottom surface of the battery receiving recess and extending from the first end to the second end of the battery receiving recess in a mutually spaced apart relationship;
a pair of guided members (110) provided on a lower surface of the battery and laterally spaced from each other so as to be engaged by a section of the respective guide rails as the second end of the battery is slid from an intermediate part of the bottom surface of the battery receiving recess to the second end of the battery receiving recess;
a battery side connector (132) provided in the second end of the battery; and
a power equipment side connector (44) provided in the second end of the battery receiving recess, and configured to be electrically connected to the battery side connector when the second end of the battery is pushed against the second end of the battery receiving recess;
wherein the section of the guide rails are configured to guide the guided members so as to laterally align the battery with respect to the battery receiving recess as the battery is displaced toward the second end of the battery recess,
**characterized in that**
the power equipment side connector is supported by the battery tray so as to be laterally moveable.

2. The electric power equipment according to claim 1, wherein the guide rails are provided with respective guide surfaces (62) that face away from each other, and the guided members are provided with respective guided surfaces (114) that oppose each other.

3. The electric power equipment according to claim 2, wherein a spacing between the guide rails in the section that guide the guided members progressively increases from a first end of the section on a side of the first end of the battery receiving recess to a second end of the section on a side of the second end of the battery receiving recess, the spacing between the guide rails at the second end of the section being substantially equal to a corresponding spacing between the guided members.

4. The electric power equipment according to claim 3, wherein the guided members include a pair of second guide ribs (110F) extending on the lower surface of the battery from an intermediate part of the lower surface of the battery toward the second end of the battery.

5. The electric power equipment according to claim 4, wherein the second guide ribs are provided with extensions that extend along at least a part of an upright surface on the second end of the battery.

6. The electric power equipment according to claim 2, wherein a spacing between the guide rails progressively increases from an intermediate part to the first end of the battery receiving recess, and the guided members include a pair of first guide ribs (110B) extending on the lower surface of the battery from an intermediate part of the lower surface of the battery toward the first end of the battery, the spacing between the guide rails in a first end side of the battery receiving recess being substantially equal to a corresponding spacing between the first guide ribs in a first end side of the battery, the first guide ribs and the guide rails overlapping each other in side view when the battery is received in the battery receiving recess.

7. The electric power equipment according to claim 1, wherein the guide rails are provided with respective guide surfaces (62) that oppose each other, and the guided members are provided with respective guided surfaces (114) that face away from each other.

8. The electric power equipment according to claim 7, wherein a spacing between the guide rails in the section that guide the guided members progressively decreases from a first end of the section on a side of the first end of the battery receiving recess to a second end of the section on a side of the second end of the battery receiving recess, the spacing between the guide rails at the second end of the section being substantially equal to a corresponding spacing between the guided members.

9. The electric power equipment according to claim 8, wherein the guided members include a pair of second guide ribs (110F) extending on the lower surface of the battery from an intermediate part of the lower surface of the battery toward the second end of the battery.

10. The electric power equipment according to claim 9, wherein the second guide ribs are provided with extensions that extend along at least a part of an upright surface on the second end of the battery.

11. The electric power equipment according to claim 7, wherein a spacing between the guide rails progressively decreases from an intermediate part to the first end of the battery receiving recess, and the guided members include a pair of first guide ribs (110B) extending on the lower surface of the battery from an intermediate part of the lower surface of the battery toward the first end of the battery, the spacing between the guide rails in a first end side of the battery receiving recess being substantially equal to a corresponding spacing between the first guide ribs in a first end side of the battery, the first guide ribs and the guide rails overlapping each other in side view when the battery is received in the battery receiving recess.

12. The electric power equipment according to claim 1, wherein upper surfaces of the guide rails are configured to support the lower surface of the battery.

13. The electric power equipment according to claim 12, wherein the upper surfaces of the guide rails are slanted downward toward the second end of the battery receiving recess.

14. The electric power equipment according to claim 1, wherein the power equipment side connector is provided with a pair of power equipment side projections (46), and the battery side connector is provided with a pair of battery side projections (132d) corresponding to the respective power equipment side projections, the battery side projections being provided with guide side surfaces (134) that are configured to cooperate with guided side surfaces (48) of the power equipment side projections so as to laterally align the battery side connector and the power equipment side connector to each other.

15. The electric power equipment according to claim 14, further comprising an engagement portion (50) provided in a lower part of the second end of the battery receiving recess, and a corresponding engagement portion (136) provided in a lower part of the second end of the battery, the corresponding engagement portion being configured to be engaged by the engagement portion of the battery receiving recess against a vertical movement.

16. The electric power equipment according to claim 1, wherein a grip (104) is provided at the first end of the battery.

## Patentansprüche

1. Elektrische Leistungsausrüstung (1), umfassend:
einen Batterieträger (19), welcher eine eine Batterie aufnehmende Ausnehmung (40) definiert, welche ein offenes oberes Ende aufweist, wobei die eine Batterie aufnehmende Ausnehmung ein erstes Ende und ein zweites Ende, welches von dem ersten Ende entfernt ist, aufweist; eine Batterie (20), welche dazu eingerichtet ist, in der eine Batterie aufnehmenden Ausnehmung entfernbar aufgenommen zu sein, wobei die Batterie ein erstes Ende und ein zweites Ende aufweist, welches dem ersten Ende bzw. dem zweiten Ende der eine Batterie aufnehmenden Ausnehmung entspricht;
ein Paar von Führungsschienen (60), welche an einer unteren Fläche der eine Batterie aufnehmenden Ausnehmung bereitgestellt sind und sich von dem ersten Ende zu dem zweiten Ende der eine Batterie aufnehmenden Ausnehmung in einer gegenseitig voneinander beabstandeten Beziehung erstrecken;
ein Paar von geführten Elementen (110), welche an einer unteren Fläche der Batterie und lateral voneinander beabstandet bereitgestellt sind, um durch einen Abschnitt der entsprechenden Führungsschienen eingegriffen zu sein, wenn das zweite Ende der Batterie von einem Zwischenteil der unteren Fläche der eine Batterie aufnehmenden Ausnehmung zu dem zweiten Ende der eine Batterie aufnehmenden Ausnehmung geschoben wird;
einen Batterie-Seitenverbinder (132), welcher in dem zweiten Ende der Batterie bereitgestellt ist; und
einen Leistungsausrüstung-Seitenverbinder (44), welcher in dem zweiten Ende der eine Batterie aufnehmenden Ausnehmung bereitgestellt ist und dazu eingerichtet ist, mit dem Batterie-Seitenverbinder elektrisch verbunden zu werden, wenn das zweite Ende der Batterie gegen das zweite Ende der eine Batterie aufnehmenden Ausnehmung gedrückt wird;
wobei der Abschnitt der Führungsschienen dazu eingerichtet ist, die geführten Elemente zu führen, um die Batterie in Bezug auf die eine Batterie aufnehmende Ausnehmung lateral auszurichten, wenn die Batterie in Richtung des zweiten Endes der Batterieausnehmung verlagert wird,
**dadurch gekennzeichnet, dass**
der Leistungsausrüstung-Seitenverbinder durch den Batterieträger gehaltert ist, um lateral beweglich zu sein.

2. Elektrische Leistungsausrüstung nach Anspruch 1, wobei die Führungsschienen mit entsprechenden Führungsflächen (62) bereitgestellt sind, welche voneinander weg weisen, und die geführten Elemente mit entsprechenden geführten Flächen (114) bereitgestellt sind, welche einander gegenüberliegend sind.

3. Elektrische Leistungsausrüstung nach Anspruch 2, wobei ein Abstand zwischen den Führungsschienen in dem Abschnitt, welcher die geführten Elemente führt, allmählich von einem ersten Ende des Abschnitts an einer Seite des ersten Ende der eine Batterie aufnehmenden Ausnehmung zu einem zweiten Ende des Abschnitts an einer Seite des zweiten Endes der eine Batterie aufnehmenden Ausnehmung ansteigt, wobei der Abstand zwischen Führungsschienen an dem zweiten Ende des Abschnitts im Wesentlichen gleich einem entsprechenden Abstand zwischen den geführten Elementen ist.

4. Elektrische Leistungsausrüstung nach Anspruch 3, wobei die geführten Elemente ein Paar von zweiten Führungsrippen (110F) umfassen, welche sich an der unteren Fläche der Batterie von einem Zwischenteil der unteren Fläche der Batterie in Richtung des zweiten Endes der Batterie erstrecken.

5. Elektrische Leistungsausrüstung nach Anspruch 4, wobei die zweiten Führungsrippen mit Erstreckungen bereitgestellt sind, welche sich entlang wenigstens eines Teils einer aufrechten Fläche an dem zweiten Ende der Batterie erstrecken.

6. Elektrische Leistungsausrüstung nach Anspruch 2, wobei ein Abstand zwischen den Führungsschienen von einem Zwischenteil zu dem ersten Ende der eine Batterie aufnehmenden Ausnehmung allmählich ansteigt und die geführten Elemente ein Paar von ersten Führungsrippen (11 OB) umfassen, welche sich an der unteren Fläche der Batterie von einem Zwischenteil der unteren Fläche der Batterie in Richtung des ersten Endes der Batterie erstrecken, wobei der Abstand zwischen den Führungsschienen in einer ersten Endseite der eine Batterie aufnehmenden Ausnehmung im Wesentlichen gleich einem entsprechenden Abstand zwischen den ersten Führungsrippen in einer ersten Endseite der Batterie ist, wobei die ersten Führungsrippen und die Führungsschienen einander in einer Seitenansicht überlappen, wenn die Batterie in der eine Batterie aufnehmenden Ausnehmung aufgenommen ist.

7. Elektrische Leistungsausrüstung nach Anspruch 1, wobei die Führungsschienen mit entsprechenden Führungsflächen (62) bereitgestellt sind, welche einander gegenüber liegen, und die geführten Elemente mit entsprechenden geführten Flächen (114) bereitgestellt sind, welche voneinander weg weisen.

8. Elektrische Leistungsausrüstung nach Anspruch 7, wobei ein Abstand zwischen den Führungsschienen in dem Abschnitt, welcher die geführten Elemente führt, allmählich von einem ersten Ende des Abschnitts an einer Seite des ersten Endes der eine Batterie aufnehmenden Ausnehmung zu einem zweiten Ende des Abschnitts an einer Seite des zweiten Endes der eine Batterie aufnehmenden Ausnehmung ansteigt, wobei der Abstand zwischen den Führungsschienen an dem zweiten Ende des Abschnitts im Wesentlichen gleich einem entsprechenden Abstand zwischen den geführten Elementen ist.

9. Elektrische Leistungsausrüstung nach Anspruch 8, wobei die geführten Elemente ein Paar von zweiten Führungsrippen (110F) umfassen, welche sich an der unteren Fläche der Batterie von einem Zwischenteil der unteren Fläche der Batterie in Richtung des zweiten Endes der Batterie erstrecken.

10. Elektrische Leistungsausrüstung nach Anspruch 9, wobei die zweiten Führungsrippen mit Erstreckungen bereitgestellt sind, welche sich entlang wenigstens eines Teils einer aufrechten Fläche an dem zweiten Ende der Batterie erstrecken.

11. Elektrische Leistungsausrüstung nach Anspruch 7, wobei ein Abstand zwischen den Führungsschienen von einem Zwischenteil zu dem ersten Ende der eine Batterie aufnehmenden Ausnehmung allmählich ansteigt und die geführten Elemente ein Paar von ersten Führungsrippen (11 OB) umfassen, welche sich an der unteren Fläche der Batterie von einem Zwischenteil der unteren Fläche der Batterie in Richtung des ersten Endes der Batterie erstrecken, wobei der Abstand zwischen den Führungsschienen in einer ersten Endseite der eine Batterie aufnehmenden Ausnehmung im Wesentlichen gleich einem entsprechenden Abstand zwischen den ersten Führungsrippen in einer ersten Endseite der Batterie ist, wobei die ersten Führungsrippen und die Führungsschienen einander in einer Seitenansicht überlappen, wenn die Batterie in der eine Batterie aufnehmenden Ausnehmung aufgenommen ist.

12. Elektrische Leistungsausrüstung nach Anspruch 1, wobei obere Flächen der Führungsschienen dazu eingerichtet sind, die untere Fläche der Batterie zu haltern.

13. Elektrische Leistungsausrüstung nach Anspruch 12, wobei die oberen Flächen der Führungsschienen in Richtung des zweiten Endes der eine Batterie aufnehmenden Ausnehmung nach unten geneigt sind.

14. Elektrische Leistungsausrüstung nach Anspruch 1, wobei der Leistungsausrüstung-Seitenverbinder mit einem Paar von Leistungsausrüstung-Seitenvorsprüngen (46) bereitgestellt ist und der Batterie-Seitenverbinder mit einem Paar von Batterie-Seitenvorsprüngen (132d) bereitgestellt ist, welche den entsprechenden Leistungsausrüstung-Seitenvorsprüngen entsprechen, wobei die Batterie-Seitenvorsprünge mit Führung-Seitenflächen (134) bereitgestellt sind, welche dazu eingerichtet sind, mit geführten Seitenflächen (48) der Leistungsausrüstung-Seitenvorsprünge zusammen zu wirken, um den Batterie-Seitenverbinder und den Leistungsausrüstung-Seitenverbinder zueinander lateral auszurichten.

15. Elektrische Leistungsausrüstung nach Anspruch 14, ferner umfassend einen Eingriffsabschnitt (50), welcher in einem unteren Teil des zweiten Endes der eine Batterie aufnehmenden Ausnehmung bereitgestellt ist, und einen entsprechenden Eingriffsabschnitt (136), welcher in einem unteren Teil des zweiten Endes der Batterie bereitgestellt ist, wobei der entsprechende Eingriffsabschnitt dazu eingerichtet ist, durch den Eingriffsabschnitt der eine Batterie aufnehmenden Ausnehmung gegen eine vertikale Bewegung eingegriffen zu werden.

16. Elektrische Leistungsausrüstung nach Anspruch 1, wobei ein Griff (104) an dem ersten Ende der Batterie bereitgestellt ist.

## Revendications

1. Équipement d'alimentation électrique (1), comprenant :
un support de batterie (19) définissant un évidement de réception de batterie (40) ayant une extrémité supérieure ouverte, l'évidement de réception de batterie ayant une première extrémité et une deuxième extrémité distante de la première extrémité ;
une batterie (20) configurée pour être reçue de manière amovible dans l'évidement de réception de batterie, la batterie ayant une première extrémité et une deuxième extrémité correspondant à la première extrémité et à la deuxième extrémité de l'évidement de réception de batterie, respectivement ;
une paire de rails de guidage (60) prévus sur une surface de fond de l'évidement de réception de batterie et s'étendant de la première extrémité à la deuxième extrémité de l'évidement de réception de batterie dans une relation mutuellement espacée ;
une paire d'organes guidés (110) prévus sur une surface inférieure de la batterie et espacés latéralement l'un de l'autre de façon à être engagés par une section des rails de guidage respectifs lorsque la deuxième extrémité de la batterie est amenée à glisser d'une partie intermédiaire de la surface de fond de l'évidement de réception de batterie à la deuxième extrémité de l'évidement de réception de batterie ;
un connecteur côté batterie (132) prévu dans la deuxième extrémité de la batterie ; et
un connecteur côté équipement d'alimentation (44) prévu dans la deuxième extrémité de l'évidement de réception de batterie, et configuré pour être connecté électriquement au connecteur côté batterie lorsque la deuxième extrémité de la batterie est poussée contre la deuxième extrémité de l'évidement de réception de batterie ;
dans lequel la section des rails de guidage est configurée pour guider les organes guidés de façon à aligner latéralement la batterie vis-à-vis de l'évidement de réception de batterie lorsque la batterie est déplacée vers la deuxième extrémité de l'évidement de batterie,
**caractérisé en ce que**
le connecteur côté équipement d'alimentation est supporté par le support de batterie de façon à être mobile latéralement.

2. Équipement d'alimentation électrique selon la revendication 1, dans lequel les rails de guidage sont pourvus de surfaces de guidage respectives (62) qui sont orientées en face l'une de l'autre, et les organes guidés sont pourvus de surfaces guidées respectives (114) qui s'opposent l'une à l'autre.

3. Équipement d'alimentation électrique selon la revendication 2, dans lequel un espacement entre les rails de guidage dans la section qui guide les organes guidés augmente progressivement d'une première extrémité de la section sur un côté de la première extrémité de l'évidement de réception de batterie à une deuxième extrémité de la section sur un côté de la deuxième extrémité de l'évidement de réception de batterie, l'espacement entre les rails de guidage à la deuxième extrémité de la section étant sensiblement égal à un espacement correspondant entre les organes guidés.

4. Équipement d'alimentation électrique selon la revendication 3, dans lequel les organes guidés comportent une paire de deuxièmes rainures de guidage (110F) s'étendant sur la surface inférieure de la batterie depuis une partie intermédiaire de la surface inférieure de la batterie vers la deuxième extrémité de la batterie.

5. Équipement d'alimentation électrique selon la revendication 4, dans lequel les deuxièmes rainures de guidage sont pourvues d'extensions qui s'étendent le long d'au moins une partie d'une surface verticale sur la deuxième extrémité de la batterie.

6. Équipement d'alimentation électrique selon la revendication 2, dans lequel un espacement entre les rails de guidage augmente progressivement d'une partie intermédiaire jusqu'à la première extrémité de l'évidement de réception de batterie, et les organes guidés comportent une paire de premières rainures de guidage (110B) s'étendant sur la surface inférieure de la batterie depuis une partie intermédiaire de la surface inférieure de la batterie vers la première extrémité de la batterie, l'espacement entre les rails de guidage dans un côté de première extrémité de l'évidement de réception de batterie étant sensiblement égal à un espacement correspondant entre les premières rainures de guidage dans un côté de première extrémité de la batterie, les premières rainures de guidage et les rails de guidage se chevauchant dans une vue latérale lorsque la batterie est reçue dans l'évidement de réception de batterie.

7. Équipement d'alimentation électrique selon la revendication 1, dans lequel les rails de guidage sont pourvus de surfaces de guidage respectives (62) qui s'opposent l'une à l'autre, et les organes guidés sont pourvus de surfaces guidées respectives (114) qui sont orientées en face l'une de l'autre.

8. Équipement d'alimentation électrique selon la revendication 7, dans lequel un espacement entre les rails de guidage dans la section qui guident les organes guidés diminue progressivement d'une première extrémité de la section sur un côté de la première extrémité de l'évidement de réception de batterie jusqu'à une deuxième extrémité de la section sur un côté de la deuxième extrémité de l'évidement de réception de batterie, l'espacement entre les rails de guidage au niveau de la deuxième extrémité de la section étant sensiblement égal à un espacement correspondant entre les organes guidés.

9. Équipement d'alimentation électrique selon la revendication 8, dans lequel les organes guidés comportent une paire de deuxièmes rainures de guidage (110F) s'étendant sur la surface inférieure de la batterie depuis une partie intermédiaire de la surface inférieure de la batterie vers la deuxième extrémité de la batterie.

10. Équipement d'alimentation électrique selon la revendication 9, dans lequel les deuxièmes rainures de guidage sont pourvues d'extensions qui s'étendent le long d'au moins une partie d'une surface verticale sur la deuxième extrémité de la batterie.

11. Équipement d'alimentation électrique selon la revendication 7, dans lequel un espacement entre les rails de guidage diminue progressivement d'une partie intermédiaire jusqu'à la première extrémité de l'évidement de réception de batterie, et les organes guidés comportent une paire de premières rainures de guidage (110B) s'étendant sur la surface inférieure de la batterie depuis une partie intermédiaire de la surface inférieure de la batterie vers la première extrémité de la batterie, l'espacement entre les rails de guidage dans un côté de première extrémité de l'évidement de réception de batterie étant sensiblement égal à un espacement correspondant entre les premières rainures de guidage dans un côté de première extrémité de la batterie, les premières rainures de guidage et les rails de guidage se chevauchant dans une vue latérale lorsque la batterie est reçue dans l'évidement de réception de batterie.

12. Équipement d'alimentation électrique selon la revendication 1, dans lequel des surfaces supérieures des rails de guidage sont configurées pour supporter la surface inférieure de la batterie.

13. Équipement d'alimentation électrique selon la revendication 12, dans lequel les surfaces supérieures des rails de guidage sont inclinées vers le bas vers la deuxième extrémité de l'évidement de réception de batterie.

14. Équipement d'alimentation électrique selon la revendication 1, dans lequel le connecteur côté équipement d'alimentation est pourvu d'une paire de saillies côté équipement d'alimentation (46), et le connecteur côté batterie est pourvu d'une paire de saillies côté batterie (132d) correspondant aux saillies côté équipement d'alimentation respectives, les saillies côté batterie étant pourvues de surfaces latérales de guidage (134) qui sont configurées pour coopérer avec des surfaces latérales guidées (48) des saillies côté équipement d'alimentation de façon à aligner latéralement le connecteur côté batterie et le connecteur côté équipement d'alimentation l'un avec l'autre.

15. Équipement d'alimentation électrique selon la revendication 14, comprenant en outre une portion d'engagement (50) prévue dans une partie inférieure de la deuxième extrémité de l'évidement de réception de batterie, et une portion d'engagement correspondante (136) prévue dans une partie inférieure de la deuxième extrémité de la batterie, la portion d'engagement correspondante étant configurée pour être engagée par la portion d'engagement de l'évidement de réception de batterie en opposition à un mouvement vertical.

16. Équipement d'alimentation électrique selon la revendication 1, dans lequel un élément de préhension (104) est prévu au niveau de la première extrémité de la batterie.
